# FASCICULE DE BREVET EUROPEEN

(11) **EP 1 521 628 B1**
(45) Date de publication et mention de la délivrance du brevet: **18.11.2015**
(21) Numéro de dépôt: 03763919.2
(22) Date de dépôt: 24.06.2003
(51) Int. Cl.: B01D 53/00, F25J 3/04, C21C 5/52

(54) **PROCEDE DE CONDUITE D'UNE INSTALLATION DE PRODUCTION**
VERFAHREN ZUM BETRIEB EINER PRODUKTIONSANLAGE
METHOD FOR OPERATING A PRODUCTION PLANT

(30) Priorité: 09.07.2002 FR 0208621
(43) Date de publication de la demande: 13.04.2005
(73) Titulaire: L'AIR LIQUIDE, Société Anonyme pour l'Etude et l'Exploitation des Procédés Georges Claude, 75007 Paris (FR)
(72) Inventeur: GUILLARD, Alain, F-75016 Paris (FR); LE BOT, Patrick, F-94300 Vincennes (FR)
(74) Mandataire: Mercey, Fiona Susan
(86) Numéro de dépôt international: PCT/FR2003/001939
(87) Numéro de publication internationale: WO 2004/007055

(56) Documents cités:
- EP-A- 0 556 861
- US-A- 5 315 521
- US-A- 5 505 052

## Description

La présente invention est relative à un procédé de conduite d'une installation de production. L'installation de production comprend une unité de traitement d'un mélange gazeux alimentée par de l'électricité, qui sert par exemple à faire fonctionner un compresseur du mélange gazeux à traiter.

EP-A-0795614 décrit un appareil de séparation d'air qui envoie des gaz ou des liquides dans un stockage quand la consommation électrique d'un four à arc est basse. Quand le four fonctionne à forte puissance, l'appareil de séparation d'air est placé en marche réduite et les besoins en gaz du four sont fournis à partir du stockage.

La dérégulation énergétique a introduit une volatilité au niveau des coûts d'énergie électrique. Pendant des périodes de temps relativement courtes (et connues très peu de temps avant qu'elles arrivent), de l'ordre de quelques heures à suivre, les prix de l'électricité peuvent être multipliés par un facteur de 10 par rapport au prix de base, voire encore plus sur des temps plus courts encore.

Une méthode de réduction de coûts énergétiques d'un appareil de séparation d'air est décrite dans US-A-5315521.

Les unités de séparation d'air sont des unités très consommatrices d'énergie électrique et, pour répondre à cette volatilité des prix électriques et en bénéficier, n'ont pas d'autres solutions que de s'arrêter ou de réduire leur production, mais cette dernière solution ne permet alors pas de réduire d'une façon sensible l'énergie électrique consommée. Classiquement, les unités peuvent conserver les produits aux spécifications données en baissant la production à jusqu'à 65 % des débits nominaux avec une consommation d'énergie qui se situe alors entre de l'ordre de 70 % de la consommation nominale (c'est à dire la consommation d'énergie pour une production de 100%).

Afin de répondre à l'ensemble des besoins en oxygène, azote et autres produits issus des gaz de l'air de leurs clients qui eux restent généralement constants même pendant ces périodes de volatilité énergétique, ces gaz ont été préalablement liquéfiés (ce qui représente un certain surcoût énergétique), lorsque l'énergie électrique était disponible à des coûts bas, et ces liquides sont vaporisés pendant ces périodes de pointe. Ce liquide vient donc en complément ou en totalité couvrir les besoins des clients.

Le problème avec l'arrêt des appareils de séparation d'air pendant ces périodes de pointe, est que leur temps de redémarrage après la période de pointe est long, de l'ordre de 8 à 24 heures, suivant la longueur de l'arrêt, période pendant laquelle il est toujours nécessaire de vaporiser du liquide, préalablement produit, ce qui limite l'intérêt économique de cette approche. Un autre défaut de cette approche est la détérioration des machines et d'autres éléments, ces multiples redémarrages introduisant des fatigues qui limitent la durée de vie desdits équipements.

« Optimal Demand-Side Response to Electricity Spot Prices for Storage-Type Customers » de Daryanian et al., IEEE Transactions on Power Systems, Vol. 4, No. 3, août 1989 explique qu'il est utile de faire fonctionner à pleine charge le compresseur d'un appareil de séparation d'air en permanence quels que soient les besoins du client.

Un but de l'invention est de pallier aux défauts des procédés et des installations de l'art antérieur.

Selon un objet de l'invention, il est prévu un procédé de conduite d'une installation de production comprenant au moins une unité de traitement d'au moins un mélange gazeux, fournissant au moins un fluide à un consommateur, et alimentée par de l'électricité, dans lequel :
- on fait fonctionner l'unité de traitement lors de périodes où l'électricité a un coût au-dessus d'un premier seuil prédéfini et lors de périodes où l'électricité a un coût en dessous d'un deuxième seuil prédéfini, le premier seuil étant supérieur ou égal au deuxième seuil,
- pendant au moins une période où l'électricité a un coût en dessous du deuxième seuil, au moins une partie du fluide est stockée dans au moins un stockage, sous forme liquide et/ou gazeuse,
- pendant au moins une période où l'électricité a un coût au-dessus du premier seuil, le fluide est fourni au consommateur à partir d'au moins un stockage, après une étape de vaporisation s'il est stocké sous forme liquide, et
- pendant au moins une période où l'électricité a un coût en dessous du deuxième seuil, on produit dans une conduite de l'unité de traitement au moins un fluide ayant une pureté prédéfinie, un débit prédéfini, une température prédéfini et une pression prédéfinie dans l'unité de traitement,
- pendant au moins une période où l'électricité a une coût au-dessus du premier seuil, la consommation électrique de l'unité de traitement est réduite, par rapport à la consommation électrique de l'unité de traitement lorsque l'électricité a un coût en dessous du deuxième seuil, et tout ou une partie du fluide est produit dans la conduite de l'unité de traitement avec une pureté inférieure à la pureté prédéfinie et/ou un débit inférieur au débit prédéfini et/ou une température inférieure à la température prédéfinie et/ou une pureté inférieure à la pureté prédéfinie, et est envoyé ailleurs qu'à un consommateur, éventuellement étant au moins en partie mis à l'air.

Selon d'autres aspects facultatifs :
- pendant au moins une période où l'électricité a un coût en dessous du deuxième seuil, un débit donné du mélange gazeux comprimé est envoyé à l'unité de traitement pour y être traité ;
- pendant au moins une période où l'électricité a un coût au-dessus du premier seuil, un débit du mélange gazeux réduit par rapport au débit donné est envoyé à l'unité de traitement pour y être traité, éventuellement en étant séparé en des fluides enrichis en certains composant du mélange gazeux ;
- l'unité de traitement est un appareil de séparation d'air produisant au moins un débit enrichi en oxygène gazeux, et/ou au moins un débit enrichi en azote gazeux, et/ou au moins un débit enrichi en argon, et/ou au moins un débit enrichi en oxygène liquide, et/ou au moins un débit enrichi en azote liquide, et/ou au moins un débit enrichi en argon liquide comme produit(s) final (finaux) ;
- pendant une période où l'électricité a un coût au-dessus du premier seuil, la consommation totale en électricité de l'unité de traitement est réduite d'au moins 25 %, de préférence d'au moins 50 % par rapport à la consommation électrique de l'unité de traitement fonctionnant lorsque le coût de l'électricité est en dessous du deuxième seuil. La consommation totale comprend pour un appareil de séparation d'air la consommation du compresseur principal d'air, de l'éventuel surpresseur et/ou compresseur(s) de produits, des pompes, circuits à eau, etc ;
- pendant au moins une période où l'électricité a un coût au-dessus du premier seuil, au moins un produit de l'unité de traitement est produit avec sensiblement la même pureté et soit un débit réduit soit sensiblement le même débit à laquelle il est produit, pendant au moins une période où l'électricité a un coût en dessous du deuxième seuil ;
- au moins un des produits de l'unité de traitement qui est produit avec sensiblement la même pureté à laquelle il est produit pendant au moins une période où l'électricité a un coût en dessous du deuxième seuil est un débit enrichi en azote et/ou est un débit enrichi en argon ;
- l'unité de traitement traite au moins un mélange gazeux pendant toutes les périodes où l'électricité a un coût au-dessus du premier seuil ;
- un compresseur comprime un mélange gazeux destiné à ou provenant de l'unité de traitement et lorsque le coût d'électricité est en dessus du premier seuil, le compresseur fonctionne à charge réduit, au moins une partie du mélange gazeux comprimé étant envoyé à l'atmosphère.

Les termes 'sensiblement la même' et 'sensiblement constante' qualifiant une pureté couvre une variation de pureté de 0,5 %, éventuellement 0,3 %.

Le terme 'sensiblement le même' qualifiant un débit couvre une variation de débit de 5 %, éventuellement 2 %.

Le terme 'sensiblement la même' qualifiant une température couvre une variation de température de 5°C, éventuellement 2°C.

Le terme 'sensiblement la même' qualifiant une pression couvre une variation de pression de 5 %, éventuellement 2 %.

Selon un autre aspect, il est prévu une installation de production comprenant
i) au moins une unité de traitement d'au moins un mélange gazeux, fournissant au moins un fluide à un consommateur, et alimentée par de l'électricité,
ii) des moyens pour faire fonctionner l'unité de traitement lors de périodes où l'électricité a un coût au-dessus d'un premier seuil prédéfini et lors de périodes où l'électricité a un coût en dessous d'un deuxième seuil prédéfini, le premier seuil étant supérieur ou égal au deuxième seuil,
iii) au moins un stockage et des moyens pour stocker au moins une partie du fluide dans au moins un stockage, sous forme liquide et/ou gazeuse, pendant au moins une période où l'électricité a un coût en dessous du deuxième seuil,
iv) des moyens pour fournir le fluide au consommateur à partir d'au moins on stockage, après une étape de vaporisation s'il est stocké sous forme liquide, pendant au moins une période où l'électricité a un coût au-dessus. du premier seuil,
v) des moyens pour produire à travers une conduite au moins un fluide ayant une pureté prédéfinie, un débit prédéfini, une température prédéfinie et une pression prédéfinie dans l'unité de traitement pendant au moins une période où l'électricité a un coût en dessous du deuxième seuil,
   caractérisée en ce qu'elle comprend des moyens pour produire le fluide à travers la conduite avec une pureté inférieure à la pureté prédéfinie, et/ou un débit inférieur au débit prédéfini, et/ou une température inférieure à la température prédéfinie, et/ou une pureté inférieure à la pureté prédéfinie, des moyens pour faire fonctionner l'unité de traitement de sorte que pendant au moins une période où l'électricité a un coût au-dessus du premier seuil, la consommation électrique de l'unité de traitement est réduite par rapport à la consommation électrique de l'unité pendant la période où l'électricité a un coût en dessous du deuxième seuil et des moyens pour envoyer ailleurs qu'au consommateur, en particulier à l'air, le fluide produit et/ou au moins une partie du mélange gazeux pendant cette période où l'électricité a un coût au-dessus du premier seuil, de préférence uniquement pendant cette période où l'électricité a un coût au-dessus du premier seuil.

Selon d'autres aspects facultatifs, l'installation peut comprendre :
- des moyens de modification de la conduite de l'installation en fonction du coût de l'électricité l'alimentant ;
- un compresseur pour comprimer un mélange gazeux destiné à ou provenant de l'unité de traitement, des moyens pour envoyer le mélange gazeux comprimé à l'unité de traitement et des moyens pour mettre a l'air du mélange gazeux comprimé ;
- des moyens pour fournir le fluide au consommateur à partir d'au moins un stockage, après une étape de vaporisation s'il est stocké sous forme liquide, uniquement pendant au moins une période où l'électricité a un coût au-dessus du premier seuil.

Les productions dues aux consommateurs sont assurées, pendant les périodes de coûts élevés, par fourniture de gaz stockés et/ou vaporisation des gaz liquéfiés et stockés sous forme liquide, lors des périodes d'énergie à coûts peu élevés.

Bien que la facture énergétique totale s'en trouve réduite, ces approches augmentent d'une façon sensible la quantité d'énergie consommée, mais sans pénaliser la durée de vie des équipements critiques, ni se pénaliser par le temps de redémarrage de l'unité arrêtée.

Dans le cas où la production d'azote serait importante au regard de la production d'oxygène, une variante de l'approche précédente peut être de réduire au minimum le débit de l'oxygène à une pureté hors spécification, mais de garder l'azote produit au niveau du minaret de la colonne basse pression à la bonne spécification, ce dernier n'ayant pas un coût énergétique important.

Cette approche permet de plus un retour rapide de l'unité de la marche avec des produits hors spécification à l'une des marches nominales avec les produits dans les spécifications, classiquement en moins d'une demi-heure.

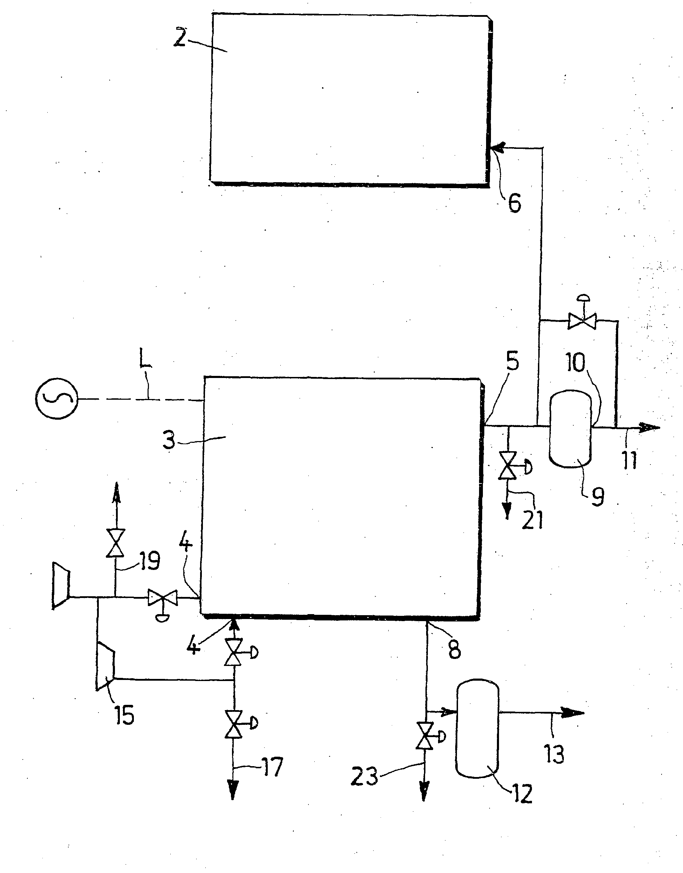

D'autres caractéristiques et les avantages de la présente invention ressortiront de la description suivante de modes de réalisation donnés à titre illustratif mais nullement limitatif, faite en relation avec le dessin annexé sur lequel :
- la figure unique représente schématiquement une installation combinée d'une unité de consommation d'un gaz de l'air et d'une unité de séparation d'air pour la mise en oeuvre d'un procédé selon l'invention.

Sur cette figure, on a représenté à titre d'exemple sur un compresseur d'air 1, une unité de consommation 2, en l'occurrence un four électrique, et une unité 3 de traitement d'un mélange gazeux, en occurrence de l'air introduit par au moins une entrée 4 et fournissant, en au moins une sortie 5, au moins un gaz adressé à une entrée 6 du four. L'unité de traitement 3 est alimentée en courant électrique fourni par la ligne d'alimentation L, typiquement par une compagnie d'électricité locale.

Typiquement l'unité de traitement 3 est un appareil de séparation d'air qui fournit de l'oxygène en sa sortie 5, de l'azote pur ou impur ou de l'argon en une sortie 8.

Selon un aspect de l'invention, la sortie 5 est reliée à un dispositif de stockage 9 ayant au moins une sortie 10 susceptible d'être reliée à l'entrée 6 de l'unité de consommation 2 ou à une ligne de distribution 11 vers un autre poste utilisateur. De façon similaire, la sortie 8 est reliée à un dispositif de stockage 12 ayant une sortie reliée à une ligne de distribution 13.

Quand le prix de l'électricité est en dessous d'un deuxième seuil, l'appareil de séparation d'air a une consommation électrique donnée quasi-constante et produit de l'oxygène à la sortie 5, relié à une conduite de l'unité de traitement, ayant un débit, une pression, une température et une pureté prédéfinis et requis par le four, par exemple débit D, une pression de 40 bara et une pureté de 99,7 % mol et une température proche de l'ambiante. Une partie de cet oxygène est envoyée directement à l'unité de consommation et le reste est stocké sous forme liquide ou gazeuse dans le stockage 9. Ce stockage peut, de manière connue, être à température ambiante s'il contient uniquement de l'oxygène gazeux ou à température cryogénique s'il contient au moins de l'oxygène liquide, le stockage pouvant même se trouver dans la boîte froide ou à l'extérieur de cette boîte froide.

L'appareil de séparation produit également à la sortie 8 relié à une conduite de l'unité de traitement de l'azote à un débit d, une pression de 35 bara et une pureté de 1 ppm d'oxygène et une température proche de l'ambiante.

Quand le prix de l'électricité dépasse un premier seuil, supérieur ou égal au deuxième seuil, la consommation électrique de l'appareil de séparation d'air baisse d'au moins 25 %, de préférence au moins 50 %, sans pour autant s'arrêter.

Les débits et les puretés des produits aux sorties 5, 8 relié aux mêmes conduites de l'unité de traitement sont réduits de sorte qu'un débit d'oxygène de 0,8 D ayant une pureté de 60 % mol. d'oxygène et un débit d'azote de 0,6d ayant une pureté de 2 % mol. d'oxygène sont produits. Ces puretés ne sont plus conformes aux performances du consommateur et les produits sont donc rejetés à l'atmosphère via les mises à l'air 21, 23 ou employés autrement.

Il est également possible que le débit, la température et/ou la pression de l'oxygène et./ou de l'azote soient inférieurs aux valeurs prédéfinies.

Alternativement la pureté de l'oxygène et/ou de l'azote peut rester sensiblement constante alors que le débit et/ou la température et/ou la pression de ce(s) gaz baisse.

Pour fournir tous les gaz requis dans l'unité de consommation, de l'oxygène gazeux provenant du stockage 9 est produit, éventuellement en vaporisant un débit liquide à l'intérieur de la boîte froide contre de l'air ou de l'azote. Plus généralement la vaporisation a lieu en dehors de la boîte froide par échange de chaleur avec l'air ambiant ou de la vapeur d'eau.

Il est possible de réduire la consommation de l'appareil de séparation en dégradant uniquement la production d'oxygène dans le cas où le coût de l'électricité dépasse le premier seuil de sorte que le débit, la pression, la température et la pureté de l'azote restent sensiblement constants (c'est à dire ne variant pas plus que 0,5 %, éventuellement 0,3 % pour les puretés, pas plus que 5 %, éventuellement 2 % pour les débits, pas plus que 5°C, éventuellement 2°C pour les températures et pas plus que 5 %, éventuellement 2 % pour les pressions).

Uniquement quand le coût de l'électricité dépasse le premier seuil, le compresseur d'air 1 destiné à l'unité de traitement 3 continue à fonctionner à bas régime (c'est à dire en comprimant un débit réduit et avec une pression de refoulement réduite, par exemple au moyen d'aubages réglables) et l'air comprimé produit est au moins partiellement mis à l'air en amont de l'épuration via la mise à l'air 19. Il peut éventuellement y avoir un surpresseur d'air 15 qui lui aussi continue à fonctionner mais en bas régime quand le coût de l'électricité dépasse le premier seuil en mettant à l'air surpressé via 17.

Le même approche peut être utilisé avec un compresseur d'azote gazeux produit et/ou un compresseur d'oxygène gazeux produit et/ou un compresseur de cycle qui peuvent continuer à fonctionner en bas régime quand le coût de l'électricité dépasse le premier seuil en mettant à l'air le gaz comprimé.

Comme le nombre de molécules d'air envoyé dans l'appareil de séparation d'air est réduit, il n'est plus possible de tirer de l'appareil les mêmes débits de fluides avec les mêmes compositions et l'opérateur a donc le choix entre la réduction d'au moins un débit existant, la réduction de la pureté d'au moins un débit existant, la réduction de la pression d'au moins un débit existant, la réduction de la température d'au moins un débit existant ou une combinaison de deux ou plus de ces effets.

L'unité de traitement 3 peut être du type cryogénique à colonne de distillation, les gaz produits l'étant avantageusement sous forme liquide pour faciliter leur stockage.

L'unité peut produire par exemple de l'oxygène et/ou de l'azote et/ou de l'argon à partir de l'air ou alternativement de l'hydrogène et/ou du monoxyde de carbone et/ou de l'azote à partir d'un mélange de ces gaz.

## Revendications

1. Procédé de conduite d'une installation de production comprenant au moins une unité de traitement (3) d'au moins un mélange gazeux, fournissant au moins un fluide à un consommateur (2), et alimentée par de l'électricité, dans lequel
- on fait fonctionner l'unité de traitement lors de périodes où l'électricité a un coût au-dessus d'un premier seuil prédéfini et lors de périodes où l'électricité a un coût en dessous d'un deuxième seuil prédéfini, le premier seuil étant supérieur ou égal au deuxième seuil,
- pendant au moins une période où l'électricité a un coût en dessous du deuxième seuil, au moins une partie d'un des au moins un fluides est stockée dans au moins un stockage (9), sous forme liquide et/ou gazeuse,
- pendant au moins une période où l'électricité a un coût au-dessus du premier seuil, l'un des au moins un fluides est fourni au consommateur au moins partiellement à partir du stockage, après une étape de vaporisation s'il est stocké sous forme liquide, et
- pendant au moins une période où l'électricité a un coût en dessous du deuxième seuil, on produit dans une conduite de l'unité de traitement au moins un fluide ayant une pureté prédéfinie, un débit prédéfini, une température prédéfinie et une pression prédéfinie dans l'unité de traitement,
- pendant au moins une période où l'électricité a un coût au-dessus du premier seuil, la consommation électrique de l'unité de traitement est réduite, par rapport à la consommation électrique de l'unité de traitement lorsque l'électricité a un coût en dessous du deuxième seuil, et tout ou une partie du fluide à pureté prédéfinie, un débit prédéfini, une température prédéfinie et une pression prédéfinie est produit dans la conduite de l'unité de traitement avec une pureté inférieure à la pureté prédéfinie, et/ou un débit inférieur au débit prédéfini, et/ou une température inférieure à la température prédéfinie, et/ou une pression inférieure à la pression prédéfinie et **caractérisé en ce que** le fluide produit à pureté inférieure t/ou à débit inférieur et/ou à température inférieure et/ou à pression inférieure est envoyé ailleurs qu'à un consommateur, éventuellement étant au moins en partie mis à l'air.

2. Procédé selon la revendication 1 dans lequel l'unité de traitement (3) est un appareil de séparation d'air produisant au moins un débit enrichi en oxygène gazeux, et/ou au moins un débit enrichi en azote gazeux, et/ou au moins un débit enrichi en argon, et/ou au moins un débit enrichi en oxygène liquide, et/ou au moins un débit enrichi en azote liquide, et/ou au moins un débit enrichi en argon liquide comme produit(s) final (finaux).

3. Procédé selon la revendication 1 ou 2 dans lequel, pendant une période où l'électricité a un coût au-dessus du premier seuil, la consommation totale en électricité de l'unité de traitement est réduite d'au moins 25 %, de préférence d'au moins 50 % par rapport à la consommation électrique de l'unité de traitement fonctionnant lorsque le coût de l'électricité est en dessous du deuxième seuil.

4. Procédé selon l'une des revendications précédentes dans lequel pendant au moins une période où l'électricité a un coût au-dessus du premier seuil, au moins un produit de l'unité de traitement est au moins partiellement produit avec sensiblement la même pureté et avec
i) soit un débit réduit par rapport au débit à laquelle il est produit, pendant au moins une période où l'électricité a un coût en dessous du deuxième seuil.
ii) soit sensiblement le même débit à laquelle il est produit, pendant au moins une période où l'électricité a un coût en dessous du deuxième seuil.

5. Procédé selon les revendications 2 à 4 dans lequel au moins un des produits de l'unité de traitement (3) qui est produit avec sensiblement la même pureté à laquelle il est produit pendant au moins une période où l'électricité a un coût en dessous du deuxième seuil est un débit enrichi en azote et/ou est un débit enrichi en argon.

6. Procédé selon l'une des revendications précédentes dans lequel l'unité de traitement (3) traite au moins un mélange gazeux pendant toutes les périodes où l'électricité a un coût au-dessus du premier seuil.

7. Procédé selon la revendication 6 dans lequel un compresseur (1, 15) faisant partie de l'unité de traitement comprime un mélange gazeux destiné à ou provenant de l'unité de traitement et lorsque le coût d'électricité est en dessus du premier seuil, le compresseur fonctionne à charge réduite, au moins une partie du mélange gazeux comprimé étant envoyée à l'atmosphère.

8. Procédé selon l'une des revendications précédentes dans lequel, lorsque l'électricité a un coût au-dessus du premier seuil, on produit moins de liquide que lorsque l'électricité a un coût en dessous du deuxième seuil ou lorsque l'électricité a un coût au-dessus du premier seuil, on ne produit pas de liquide.

9. Procédé selon l'une des revendications précédentes dans lequel le fluide envoyé au stockage a une pureté sensiblement constante.

## Patentansprüche

1. Verfahren zum Betreiben einer Produktionsanlage, die mindestens eine Einheit (3) zur Behandlung mindestens eines gasförmigen Gemisches aufweist, die einem Verbraucher (2) mindestens ein Fluid bereitstellt und durch Elektrizität versorgt wird, bei dem
- die Behandlungseinheit in Zeiträumen betrieben wird, wo die Elektrizität mit Kosten oberhalb eines vordefinierten ersten Schwellenwertes verbunden ist, und in Zeiträumen, wo die Elektrizität mit Kosten unterhalb eines vordefinierten zweiten Schwellenwertes verbunden ist, wobei der erste Schwellenwert größer oder gleich dem zweiten Schwellenwert ist,
- während mindestens eines Zeitraums, wo die Elektrizität mit Kosten unterhalb des zweiten Schwellenwertes verbunden ist, mindestens ein Teil des mindestens einen Fluids in mindestens einem Speicher (9) in flüssiger und/oder gasförmiger Form gespeichert wird,
- während mindestens eines Zeitraums, wo die Elektrizität mit Kosten oberhalb des ersten Schwellenwertes verbunden ist, eines des mindestens einen Fluids dem Verbraucher mindestens teilweise aus dem Speicher bereitgestellt wird, und zwar nach einem Schritt des Verdampfens, wenn es in flüssiger Form gespeichert wird, und
- während mindestens eines Zeitraums, wo die Elektrizität mit Kosten unterhalb des zweiten Schwellenwertes verbunden ist, in einer Leitung der Behandlungseinheit mindestens ein Fluid produziert wird, das eine Reinheit, eine Menge, eine Temperatur und einen Druck aufweist, die in der Behandlungseinheit vordefiniert werden,
- während mindestens eines Zeitraums, wo die Elektrizität mit Kosten oberhalb des ersten Schwellenwertes verbunden ist, der elektrische Verbrauch der Behandlungseinheit reduziert ist gegenüber dem elektrischen Verbrauch der Behandlungseinheit, wenn die Elektrizität mit Kosten unterhalb des zweiten Schwellenwertes verbunden ist, und das gesamte oder ein Teil des Fluids mit der vordefinierten Reinheit, einer vordefinierten Menge, einer vordefinierten Temperatur und einem vordefinierten Druck in der Leitung der Behandlungsanlage mit einer Reinheit, die geringer als die vordefinierte Reinheit ist, und/oder einer Menge, die geringer als die vordefinierte Menge ist, und/oder einer Temperatur, die geringer als die vordefinierte Temperatur ist, und/oder einem Druck, der geringer als der vordefinierte Druck ist, produziert wird und **dadurch gekennzeichnet, dass** das mit geringerer Reinheit und/oder mit geringerer Menge und/oder mit geringerer Temperatur und/oder mit geringerem Druck produzierte Fluid anderswo als an einen Verbraucher geleitet wird, wobei es gegebenenfalls mindestens zum Teil an die Luft gesetzt wird.

2. Verfahren nach Anspruch 1, bei dem die Behandlungseinheit (3) ein Gerät zur Luftzerlegung ist, das mindestens eine Menge, die mit gasförmigem Sauerstoff angereichert ist, und/oder mindestens eine Menge, die mit gasförmigem Stickstoff angereichert ist, und/oder mindestens eine Menge, die mit Argon angereichert ist, und/oder mindestens eine Menge, die mit flüssigem Sauerstoff angereichert ist, und/oder mindestens eine Menge, die mit flüssigem Stickstoff angereichert ist, und/oder mindestens eine Menge, die mit flüssigem Argon angereichert ist, als Endprodukt(e() erzeugt.

3. Verfahren nach Anspruch 1 oder 2, bei dem, während eines Zeitraums, wo die Elektrizität mit Kosten oberhalb des ersten Schwellenwertes verbunden ist, der Gesamtverbrauch der Behandlungseinheit an Elektrizität um mindestens 25 %, vorzugsweise um mindestens 50 %, gegenüber dem elektrischen Verbrauch der Behandlungseinheit, die betrieben wird, wenn die Elektrizität mit Kosten unterhalb des zweiten Schwellenwertes verbunden ist, reduziert wird.

4. Verfahren nach einem der vorhergehenden Ansprüche, bei dem während mindestens eines Zeitraums, wo die Elektrizität mit Kosten oberhalb des ersten Schwellenwertes verbunden ist, mindestens ein Produkt der Behandlungseinheit mit mindestens teilweise im Wesentlichen der gleichen Reinheit produziert wird und mit
i) entweder einer Menge, die gegenüber der Menge reduziert ist, in der sie während eines Zeitraums, wo die Elektrizität mit Kosten unterhalb des zweiten Schwellenwertes verbunden ist, produziert wird,
ii) oder im Wesentlichen der gleichen Menge, in der sie während eines Zeitraums, wo die Elektrizität mit Kosten unterhalb des zweiten Schwellenwertes verbunden ist, produziert wird.

5. Verfahren nach Anspruch 2 bis 4, bei dem mindestens eines der Produkte der Behandlungseinheit (3), das im Wesentlichen mit der gleichen Reinheit produziert wird, mit der es während mindestens eines Zeitraums, wo die Elektrizität mit Kosten unterhalb des zweiten Schwellenwertes verbunden ist, eine mit Stickstoff angereicherte Menge und/oder eine mit Argon angereicherte Menge ist.

6. Verfahren nach einem der vorhergehenden Ansprüche, bei dem die Behandlungseinheit (3) mindestens ein gasförmiges Gemisch während aller Zeiträume behandelt, wo die Elektrizität mit Kosten oberhalb des ersten Schwellenwertes verbunden ist.

7. Verfahren nach Anspruch 6, bei dem ein Kompressor (1, 15), der Teil der Behandlungseinheit ist, ein gasförmiges Gemisch verdichtet, das für die Behandlungseinheit bestimmt ist oder ihr entstammt, und, wenn die Elektrizitätskosten oberhalb des ersten Schwellenwertes sind, der Kompressor mit reduzierter Last betrieben wird, wobei mindestens ein Teil des gasförmigen Gemisches an die Atmosphäre geleitet wird.

8. Verfahren nach einem der vorhergehenden Ansprüche, bei dem, wenn die Elektrizität mit Kosten oberhalb des ersten Schwellenwertes verbunden ist, weniger Flüssigkeit erzeugt wird, als wenn die Elektrizität mit Kosten unterhalb des zweiten Schwellenwertes verbunden ist, oder bei dem, wenn die Elektrizität mit Kosten oberhalb des ersten Schwellenwertes verbunden ist, keine Flüssigkeit erzeugt wird.

9. Verfahren nach einem der vorhergehenden Ansprüche, bei dem das Fluid mit einer im Wesentlichen konstanten Reinheit an den Speicher geleitet wird.

## Claims

1. Method for operating a production facility, comprising at least one unit (3) for processing at least one gaseous mixture, supplying at least one fluid to a consumer (2), and being supplied with electricity, wherein:
- the processing unit operates during periods when the cost of electricity is above a first predefined threshold and during periods when the cost of electricity is below a second predefined threshold, the first threshold being greater than or equal to the second threshold;
- during at least one period when the cost of electricity is below the second threshold, at least part of one of the at least one fluids is stored in at least one storage tank (9) in liquid and/or gaseous form;
- during at least one period when the cost of electricity is above the first threshold, one of the at least one fluids is at least partially supplied to the consumer from the storage tank, after a steaming step if it is stored in liquid form; and
- during at least one period when the cost of electricity is below the second threshold, at least one fluid having a predefined purity, a predefined flow, a predefined temperature and a predefined pressure in the processing unit is produced in a duct of the processing unit;
- during at least one period when the cost of electricity is above the first threshold, the electricity consumption of the processing unit is reduced, relative to the electricity consumption of the processing unit when the cost of electricity is below the second threshold, and all or part of the fluid having a predefined purity, a predefined flow, a predefined temperature and a predefined pressure is produced in the duct of the processing unit with purity lower than the predefined purity and/or a flow lower than the predefined flow and/or a temperature lower than the predefined temperature and/or a pressure lower than the predefined pressure, and is **characterised in that** the fluid produced with lower purity and/or lower flow and/or lower temperature and/or lower pressure is then sent to only one consumer, is possibly being at least partly discharged into the air.

2. Method according to claim 1, wherein the processing unit (3) is an air separation apparatus producing at least one gaseous oxygen-enriched flow and/or at least one gaseous nitrogen-enriched flow and/or at least one argon-enriched flow and/or at least one liquid oxygen-enriched flow and/or at least one liquid nitrogen-enriched flow and/or at least one liquid argon-enriched flow as final product(s).

3. Method according to either claim 1 or claim 2, wherein, during a period when the electricity cost is above the first threshold, the total electricity consumption of the processing unit is reduced by at least 25 %, preferably by at least 50 %, relative to the electricity consumption of the processing unit operating when the electricity cost is below the second threshold.

4. Method according to any of the preceding claims, wherein, during at least one period when the electricity cost is above the first threshold, at least one product of the processing unit is at least partially produced with substantially the same purity and with:
i) either a reduced flow relative to the flow at which it is produced, during at least one period when the electricity cost is below the second threshold;
ii) or substantially the same flow at which it is produced, during at least one period when the electricity cost is below the second threshold.

5. Method according to claims 2 to 4, wherein at least one of the products of the processing unit (3) that is produced with substantially the same purity as the purity that is produced during at least one period when the electricity cost is below the second threshold is a nitrogen-enriched flow and/or is an argon-enriched flow.

6. Method according to any of the preceding claims, wherein the processing unit (3) processes at least one gaseous mixture during all of the periods when the electricity cost is above the first threshold.

7. Method according to claim 6, wherein a compressor (1, 15) forming part of the processing unit compresses a gaseous mixture intended for or originating from the processing unit and, when the electricity cost is above the first threshold, the compressor operates at a reduced load, at least part of the compressed gaseous mixture being sent into the atmosphere.

8. Method according to any of the preceding claims, wherein, when the electricity cost is above the first threshold, less liquid is produced than when the electricity cost is below the second threshold or, when the electricity cost is above the first threshold, liquid is not produced.

9. Method according to any of the preceding claims, wherein the fluid sent to the storage tank has substantially constant purity.
